# EUROPEAN PATENT APPLICATION

(11) **EP 4 841 525 A1**
(43) Date of publication of application: **18.11.2026**
(21) Application number: 26178034.0
(22) Date of filing: 11.05.2026
(51) Int. Cl.: G06N 10/40, G06N 10/70

(54) **PROCESS OF GENERATING GOTTESMAN-KITAEV-PRESKILL (GKP) QUANTUM STATES OF LIGHT AND BREEDER SYSTEM THEREFOR**

(30) Priority: 13.05.2025 US 202563805047 P
(71) Applicant: Xanadu Quantum Technologies Holdings ULC, Toronto, Ontario M5G 2C8 (CA)
(72) Inventor: BOURASSA, Joseph Eli, Toronto, M4J 1C4 (CA); ALEXANDER, Rafael Nikolai, Toronto, M2N 1T1 (CA); LOPETEGUI GONZÁLEZ, Carlos Ernesto, 75005 Paris (FR); HASTRUP, Jacob, 2300 København S (DK); GONZALEZ ARCINIEGAS, Carlos Andres, Toronto, M4M 3E9 (CA)
(74) Representative: Hoyng Rokh Monegier B.V.

(57) **Abstract**

The breeder system can have a plurality of Gaussian boson sampling (GBS) sources; an optical circuit having breeding stages optically connected between the plurality of GBS sources and an output, successive ones of the one or more breeding stages having a decreasing number of breeding units, each breeding unit including a beamsplitter operable to split input states of light into output states of light at a controllable ratio, and a breeder detector measuring one of the output states, and the breeding units of at least one of the breeding stages have a first phase shifter operable to impart a phase rotation at a first controllable angle, and a second phase shifter operable to impart a phase rotation at a second controllable angle; and a controller operable to control the ratio, the first angle and the second angle.

## Description

### FIELD

The present disclosure is related to quantum optical circuits, and more specifically, to the generation of Gottesman-Kitaev-Preskill (GKP) quantum states of light for use in quantum computing.

### BACKGROUND

Quantum computing is a type of computation which leverages one or more quantum mechanical effects, such as superposition, interference, and entanglement. Devices that perform quantum computations are known as quantum computers. Most quantum computing models are based on the quantum bit, or "qubit", which can be in different superpositions of 1 and 0 at once. Qubits are used to encode quantum information. Gottesman-Kitaev-Preskill (GKP) quantum states, which can be encoded in optical modes, are a topic of research for encoding qubits, namely for error correction and fault tolerance. Systems used to generate GKP quantum states are commonly referred to in the art as GKP state factories.

### SUMMARY

GKP quantum states, namely GKP sensor states (square lattice quantum states), can be encoded in optical modes and used in the context of performing quantum computations based on photonic architectures. Photonic architectures can be implemented using waveguides in the form of optical fiber circuits or solid-state optical components, and there is commercial interest which is driven by the possibility of integrating waveguides and optical components in the form of integrated circuits, sometimes referred to as "photonics on chip", which can be seen as using photons instead of electrons in the context of integrated circuits.

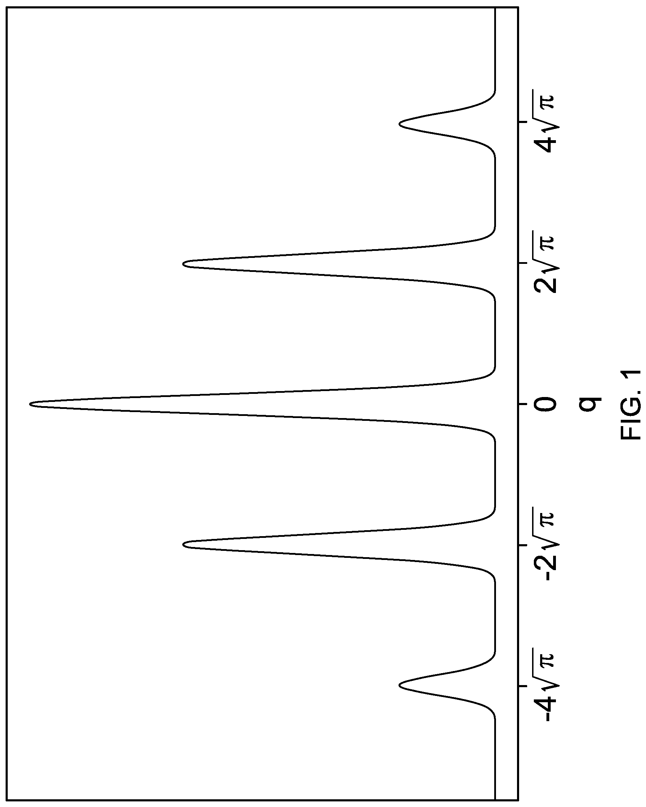

In its finite-energy form, an example of a GKP state which can be referred to herein as a GKP sensor state, can be defined as a superposition of displaced, squeezed states with a specific periodic spacing in both quadratures of the electromagnetic field. A larger subset of GKP states is square lattice states, which have a constant, but not specific, periodic spacing in both quadratures, with a same spacing in the two quadratures. A still larger subset of GKP states are "rectangular lattice" states which have periodic spacing in the two quadratures, but a different spacing from one quadrature to the other. GKP states which have non-rectangular lattice structures also exist and will be referred to herein as "sheared states" herein. Fig. 1 shows a finite-energy square lattice GKP |0> state, or sensor state, including a superposition of displaced, squeezed states. Fig. 1 shows the spacing in the q quadrature, but it will be understood that since the state shown is a sensor state, the spacing is the same in both quadratures (typically denoted q and p). Due to the shape of the wavefunction (see Fig. 1), the squeezed states in the superposition are often referred to as the peaks, teeth, or lobes of the GKP state. A common metric for the quality of a GKP state is the level of squeezing in each of its teeth. The five peaks of Fig. 1 are separated by 2√π in the q quadrature and each has roughly 12 dB of squeezing. As used herein, a state is squeezed when the noise in one variable is reduced below the symmetric limit at the expense of the increased noise in the conjugate variable such that the Heisenberg uncertainty relation is not violated.

One way of generating a GKP state of light is the use of Gaussian Boson Sampling (GBS) sources, which may alternately be referred to as Gaussian Boson Samplers or Gaussian Boson Circuits. In some GBS sources, squeezed states of light in a few optical modes are passed through an interferometer including phase shifters and beamsplitters before all but one of the modes are measured using photon-number-resolving (PNR) detectors. The PNR measurement is the non-Gaussian resource that allows for exotic wavefunctions to be produced. PNR measurement can be expected to be performed at cryogenic temperatures, by contrast with some other components of a GKP state factory and may therefore be perceived as being costly.

As an example, in the ideal, lossless case, using three optical modes, a specific PNR pattern - e.g., occurring with a probability of ~0.1% - heralds a state with -96% fidelity to a GKP |0> state with ~10 dB of squeezing and a peak spacing of 2√π . Since these sources are probabilistic (albeit heralded), many copies of GBS circuits can be used in parallel to boost the probability of a GKP state being generated. As used herein, for a desired state to be "heralded" means that a device provides a signal that the desired state has been successfully generated/produced.

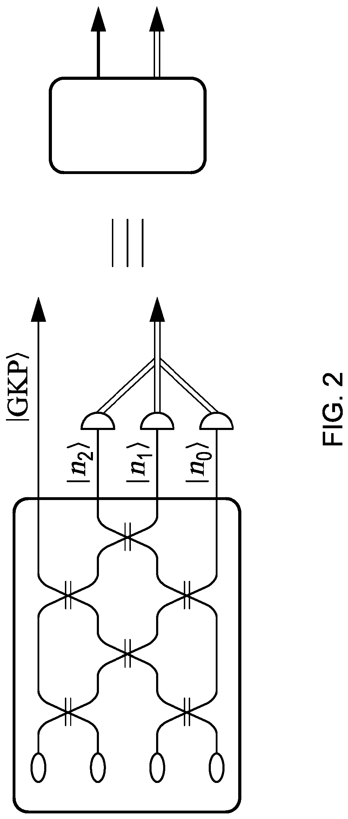

Fig. 2 shows an example of a Gaussian Boson Sampling (GBS) source, compatible with some embodiments, namely in the context of GKP state factories. Additional details regarding GBS sources can be found, by way of example only, in "Blueprint for a scalable photonic fault-tolerant quantum computer," J.E. Bourassa, et al., Quantum, 5:392 (2021) ("Bourassa"). Referring to Fig. 2, displaced squeezed states in different spatial modes enter an interferometer, and all but one (i.e., *n* ₀ through *n* ₂) are sent to PNR detectors. The double lines represent classical information, which can be used to trigger a switch on the emitted port. The right portion of Fig. 2 is a simplified representation of a single GBS device. Different types of GBS sources exist and the one shown in Fig. 2 is provided solely as an example.

A technique for addressing low probability of generation of a GKP sensor state from individual GBS sources is to use multiplexing. A multiplexer can include a plurality of GBS sources, and a network of reconfigurable beamsplitters heralded on the PNR outcomes. The multiplexer can shuttle the output of a successful GBS source to the next component.

Another technique for addressing low probability of generation of a GKP sensor state is swapping out. Swapping out refers to swapping out an output of a GBS source with a squeezed state of light, which can be produced deterministically, when it is detected that the output of the GBS source is not a GKP sensor state. This technique can be combined into a multiplexer such that when all GBS sources attached to a given MUX fail, the output of the MUX can be "swapped out" for a squeezed state of light, which can be produced deterministically.

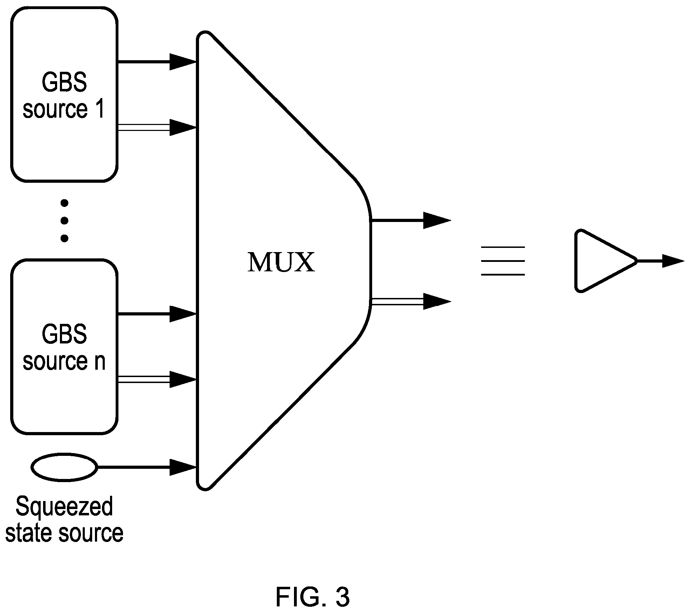

Fig. 3 shows an example multiplexer (MUX), compatible with some embodiments. The output states of several GBS sources (depicted on the left, similar to as shown in Fig. 2) and one squeezed state (depicted as an oval) are input to the MUX. If at least a single GBS source heralds a finite-energy GKP state, then that state is outputted. Otherwise, the squeezed state is outputted. A downside of swapping in squeezed states is that they may be treated as errors, and there can be a limit to how many such swap-ins can be tolerated until the quantum error correction scheme fails. In some embodiments, the overall system shown in Fig. 3 may be referred to as a GBS source and used as such, in which case the individual GBS sources included in the overall system can be referred to alternately as GBS sub-sources.

Challenges associated with practical implementations of a GKP state factory, which can be addressed by some embodiments of the present disclosure, include: state generation probability, quality of GKP states, scalability of GBS devices, and loss.

Concerning state generation probability,the example three-mode device discussed above can generate a GKP state with a probability of ~0.1%, for example. This can place a significant burden on the MUX, since for the MUX to boost the probabilities to 25%, 50%, 75%, 99% could involve, for example, ~300, 700, 1400, or 4600 GBS sources (multiply by three to get the number of squeezers), with switch tree depths of 10, 11, 12, 14, respectively. These are the overheads for generating a single node in the cluster state. The cluster state includes a plurality of optical modes referred to herein as a "macronode."

Concerning quality of GKP states and scalability of GBS devices, although some system architectures described herein are tolerant to swapping out GKP states for squeezed states (e.g., multiplexing to 100% is not required), leveraging the swap-outs may involve a need to improve the quality of GKP states (e.g., an amount of per-peak squeezing). Since the MUX improves the probability, but potentially not the quality, of the GBS output, larger GBS devices may be used (by way of example) to enhance the state quality. Increasing the size of GBS devices, however, is not necessarily a scalable way to improve GKP states, since increasing the size of GBS devices can involve more modes, deeper interferometers, and conditioning on more PNR outcomes, thereby potentially reducing the probability of successful outcomes.

Concerning loss, tied in with the previous two points, generating states with higher quality while maintaining a high-enough output probability may involve the use of GBS interferometers and/or MUX switching networks with larger depth(s). The associated increase in the number of optical components could result in higher losses.

Another way of addressing the low probability of generation of a GKP sensor state with a GBS source can be referred to as breeding, and can involve producing GKP sensor states, or other types of GKP states, from "imperfect" states (i.e., states which are not "suitable" GKP sensor states - such as states having a quality which is too low to be considered satisfactory to be heralded for use as is). Breeding can involve, for example, a cascade, or tree-like circuit, with lesser and lesser outputs at each successive one of one or more breeding stages.

A system performing the function of breeding can be referred to as a "breeder system", or "breeder". In practice, a breeder system may also be considered to include the subsystems which produce the input states of the first breeding stage, which can each include single or multiple GBS sources and potentially more complex functions such as swapping-in or multiplexing ability. Moreover, a breeder system may also include additional functions applied to outputs of one or more breeding stages, such as multiplexing or swapping-in. Indeed, a typical embodiment may include all of the above : multiple GBS devices in parallel, picking some of the best states to work with, breeding them to produce GKP states, and finally swapping in squeezed states when the breeding fails. Indeed, multiplexing can be integrated into the breeding network (which is typically referred to as "hybrid MUX-breeding") where some of the beam splitters in the breeding network can also operate as switches by setting the beam splitter angles to 0 or pi/2.

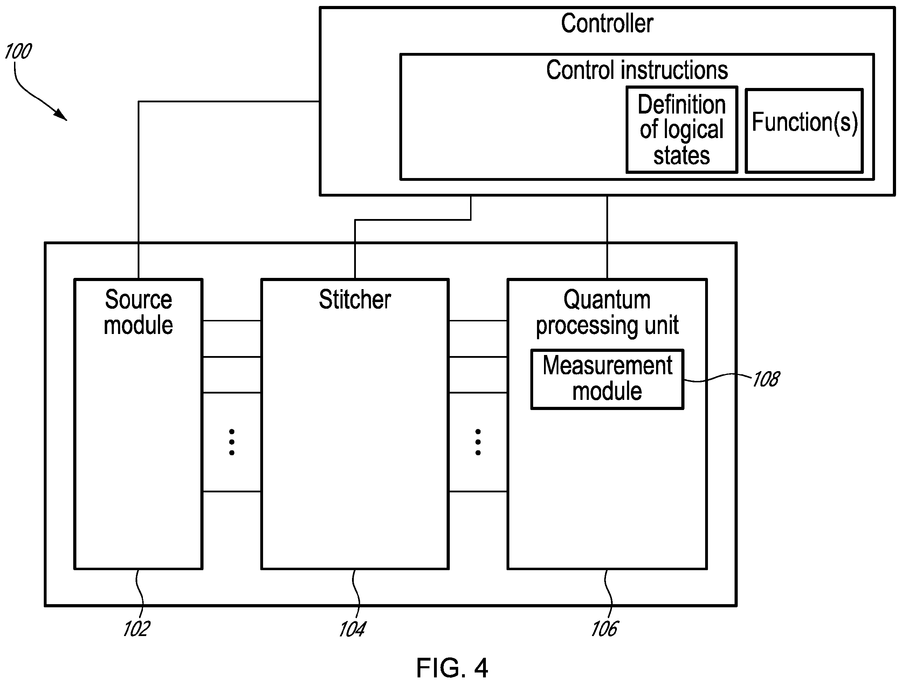

Accordingly, GBS source design, multiplexing (e.g., adding a lot more GBS devices in parallel and picking a handful of best output states) swapping in and/or breeding are ways to address the low probability of generation of a GKP sensor state from individual GBS sources. Different embodiments may include different combinations of the above techniques as part of a state factory. The state factory, such as a GKP state factory for instance, can be used to generate states of light for use in quantum computing. In the context of a photonic quantum computer, for instance, an example of which is presented in Fig. 4, the breeder and/or state factory having a breeder can form part of or constitute a source module 102, and the output of the source module 102, such as the output of the breeder for instance, can be provided as an input to a stitcher 104, such as a time and/or space stitcher, which can create a cluster state used as a resource in quantum computing performed with a photonic quantum processing unit (QPU) 106.

A breeder may have one or more stages. Indeed, if, for instance, the input states of the first stage of the breeder are high-quality states that have multiple peaks (e.g., 3-peak or 4-peak states, or more - which would typically involve relatively complex GBS source devices, potentially making use of multiplexing and/or swapping out) then it might be sufficient in some embodiments to only do one round of breeding. In practice, it may be difficult to generate such high-quality states as input states, or, otherwise said, it may be easier to add breeding stages than to achieve such quality of input states, in which case a breeder system designer may elect a design having more breeding stages and less complex GBS source devices.

A first approach to breeding, which will be referred to herein as rectangular lattice breeding, is described in greater detail in US patent publication 2024/0346357. In this first approach, certain "imperfect" states of light can be used in breeding. While such an approach can be suitable to a certain degree, it will be understood that increasing the types of states of light which can be used in breeding can be beneficial.

Indeed, some states of light, which will be referred to herein as "sheared states", have non-rectangular lattices. Such states may have a rotation relative to a state which has a periodic (equal or unequal) spacing in both quadratures, or otherwise said, a rotation relative to a rectangular lattice state. In accordance with the first approach, some sheared states which are rotated relative to the measured q quadrature may be rejected, such as due to limited expectations of success, limiting the amount of states available for the breeding process.

It was found that in many embodiments where sheared states were heralded, they could be successfully used in breeding, allowing their use in the creation of rectangular, and even square lattice GKP (i.e. sensor state). This can result in an increase in the types of states of light which can be used in breeding. Indeed, if an input lattice has a sheared state not aligned to a desired quadrature, a rotation may be applied to bring the sheared state into alignment either directly, or indirectly, e.g. after a few iterations.

Indeed, one way of understanding breeding protocols is to consider an associated lattice in phase space for each of the input states. Linear optical elements (beamsplitters and phase shifters) that interfere together the states can align one of the basis vectors of the lattice to the same axis as the homodyne measurement. In turn, this can create an output state that has an associated lattice, where an aim of the protocol, in some embodiments, can be for the output state to have higher quality than the inputs. Including phase shifters as part of the linear optical elements that perform the breeding protocol can help in two ways.

First, even if one wishes to perform breeding in accordance with protocols described in US patent publication 2024/0346357, if the basis vectors of the lattice are not aligned to the measurement, e.g. because the lattice is sheared and rotated instead of being a rectangular lattice aligned to the measurement, then the phase shifters allow one to align the lattice accordingly. In this way, the set of possible states that can be bred may be increased.

Second, there can be multiple choices of basis vectors for a given lattice. This means, there are multiple rotations to the state that can be applied, where each rotation may correspond to making a particular choice of basis for the lattice, and aligning that basis to the axis of the homodyne measurement. Each of these choices may output states of varying quality with associated lattices, and there can be a more optimal choice or a less optimal choice for a given set of input states. Without phase shifters (e.g., without performing phase rotations), a limited choice of basis vector can be aligned to the measurement. By including phase shifters (e.g., by performing phase rotations), more choices are possible. This can increase the set of possible ways to combine input states, offering the possibility of increasing the potential quality of the output state by optimizing over that set.

In accordance with one aspect, there is provided a breeder system comprising: a plurality of Gaussian boson sampling (GBS) sources operable to produce continuously variable (CV) states of light, each GBS source having one or more source detectors configured to acquire quantum information about the CV states of light produced; an optical circuit having a cascade of one or more breeding stages optically connected between the plurality of GBS sources and an output, each breeding stage having one or more breeding units, successive ones of the one or more breeding stages in the cascade having a decreasing number of breeding units, each breeding unit including a beamsplitter operable to interfere input states of light into output states of light at a controllable ratio, and a breeder detector measuring one of the output states to acquire quantum information about another one of the output states, wherein the one or more breeding units of at least one of the breeding stages each have a first phase shifter operable to impart a phase rotation at a first controllable angle, and a second phase shifter operable to impart a phase rotation at a second controllable angle; and a controller operable to control the ratio, the first angle and the second angle based on the acquired quantum information.

In accordance with another aspect, there is provided a process of generating a Gottesman-Kitaev-Preskill (GKP) quantum state of light, the process comprising: generating a plurality of continuously variable (CV) states of light using Gaussian boson sampling (GBS); performing breeding operations in a cascade of one or more breeding stages wherein, in each breeding stage one or more pairs of input states of light are beam split into an output state routed forward and a detected state which is measured, the breeding operations of at least one of the breeding stages including performing a first rotation in phase space of a first one of the corresponding input states, output state and detected state, and performing a second rotation in phase space of a second one of the corresponding input states, output state and detected state; and controlling an angle of the beam splitting, an angle of the first rotation, and an angle of the second rotation in a manner for the output state of a final one of the one or more breeding stages in the cascade to be the GKP quantum state of light.

In accordance with another aspect, there is provided a Gottesman-Kitaev-Preskill (GKP) state factory comprising: a plurality of Gaussian boson sampling (GBS) sources; an optical circuit having one or more breeding stages optically connected between the plurality of GBS sources and an output, successive ones of the one or more breeding stages having a decreasing number of breeding units, each breeding unit including a beamsplitter operable to interfere input states of light into output states of light at a controllable ratio, and a breeder detector measuring one of the output states, wherein the one or more breeding units of at least one of the breeding stages each have a first phase shifter operable to impart a phase rotation at a first controllable angle, and a second phase shifter operable to impart a phase rotation at a second controllable angle; and a controller operable to control the ratio, the first angle and the second angle.

It will be noted that this specification concerns the practical, tangible applications of quantum computing. As well-known and understood by persons having ordinary skill in the art, in practical quantum computation, observed (measurable) states seldom correspond to the mathematical definition, or to a mathematically perfect expression of such states. A practical state can be said to be a state of a given type when there is sufficient correlation between the features of the practical state and its mathematical definition to allow its use as such in the practical context of quantum computations. Accordingly, in this specification, expressions such as GKP sensor state, GKP state, cat state, multi-peak state, etc., are not to be interpreted as limited to theoretically (mathematically) perfect instances of such states and are to be interpreted as including practical approximations to the theoretically perfect instances of such states. In practice, when implementing a quantum system, one can try to make a given state as close as possible to a mathematical definition of such a state, taking into consideration hardware limitations inherent to any practical implementation, but in many cases, as long as the state is close enough to the mathematical definition to be practically useful in performing a quantum computation, it can be deemed suitable for practical purposes and can be understood to constitute a practical expression of the state's definition in a real-world implementation. Indeed, even relatively inefficient quantum computations can be of practical interest in some cases. Accordingly, in many embodiments, states which have imperfections compared to a corresponding mathematical definition may nonetheless be "heralded" as a state corresponding to the corresponding mathematical definition and used as such for the purpose of performing a quantum computation. In this sense, heralding refers to recognizing a practical state as being sufficiently close to an associated mathematical definition for the purpose of accomplishing the quantum computation task at hand. It will also be noted that in this specification, unless otherwise indicated, the expression "light" will be used loosely to refer to electromagnetic radiation and can include non-visible light such as infrared light.

Many further features and combinations thereof concerning the present improvements will appear to those skilled in the art following a reading of the instant disclosure.

### DESCRIPTION OF THE FIGURES

In the figures,
Fig. 1 shows a finite-energy square lattice GKP |0〉 state, including a superposition of displaced, squeezed states;
Fig. 2 shows an example of a Gaussian Boson Sampling (GBS) source, compatible with some embodiments;
Fig. 3 shows an example of a GBS source formed of individual sources and a multiplexer (MUX), compatible with some embodiments;
Fig. 4 is a schematic view of an example quantum computer;
Fig. 5 is a schematic view of two equivalent circuits for breeding;
Fig. 6 is a schematic view of an example circuit for breeding;
Fig. 7 is an example set of quantum states of light and their evolution based on different breeding techniques;
Fig. 8A and 8B are schematic views of an example circuit for breeding seen in two different ways;
Fig. 9 is a schematic view of a circuit for breeding;
Fig. 10 is a schematic representation of a sheared lattice state;
Fig. 11 is a schematic representation of an example protocol to breed cat states;
Figs 12A to 12D are schematic representations of a circuit undergoing transformation;
Fig. 13 is a schematic view of an example breeder system which can be used as or as part of a GKP state factory, in accordance with one embodiment, and Fig. 13A is an enlarged portion thereof;
Fig. 14 is a schematic view of an example beam splitter;
Fig. 15 are graphs representing example states of light;
Figs 16a to 16g are pairs of graphs showing the evolution of states of light undergoing breeding in accordance with different breeding protocols;
Fig. 17 are graphs showing the progression of states of light undergoing breeding in accordance with different breeding protocols; and
Fig. 18 is a schematic view of an example computer.

### DETAILED DESCRIPTION

As exposed above, in accordance with one approach to breeding described in US patent publication 2024/0346357, all the homodyne detectors in the breeding system measure in the p-quadrature. It was found that in some cases, when the measurements were performed along different angles depending on the approximate lattice of the GBS output, the performance could sometimes be better. It is submitted that this can improve the quality of output states in some embodiments, in turn reducing the depths of the refinery and QPU and/or boost loss tolerance.

Indeed, some approaches to breeding focus on breeding GKP states that lie on rectangular lattices with either the same or different aspect ratios. It was found possible instead to focus on breeding GKP states that lie on rotated, or "sheared" lattices. This can be done actively (e.g., via the addition of photons) by applying a Gaussian unitary to the states to bring them to a common, rectangular lattice and then using previous techniques, which may be performed using inline squeezing operations to change the spacing of the GKP lattice. This latter avenue may be very difficult or costly to accomplish in practice. Measurement-based squeezing is possible as well. Alternately, such states can be bred passively using phase shifters and adaptive beamsplitters. When a sensor state is the desired output, and uneven spacing rectangular lattice state is obtained, the unevenness in spacing can be corrected with squeezing but this typically adds noise and may not be suitable to some embodiments.

One example approach which can be used to allow the use of GPS outputs which do not lie on a rectangular lattice involves using a homodyne measurement angle which can be along an angle (quadrature) which is not q nor p and hence can be compared to a GKP Pauli Y measurement. Accordingly, this approach may alternately be referred to as "y-breeding".

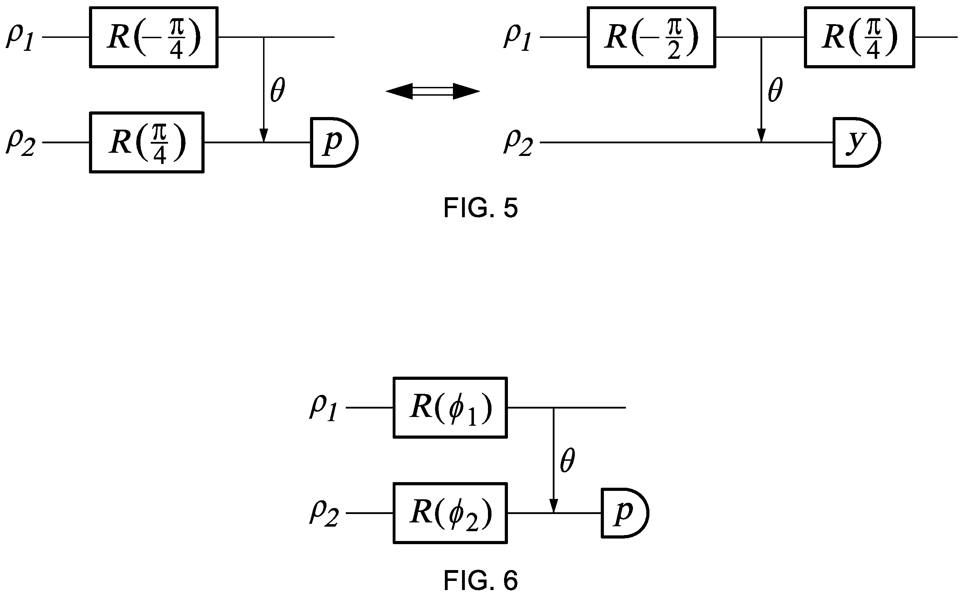

With reference to Fig. 5, an example circuit for y-breeding when the input states are square (aligned to the sensor lattice) is shown in accordance with two alternative notations, where $y = \sqrt{1 / 2} \left(q+p\right)$. The measurement along the y quadrature on the right-hand side is one example of y-breeding. If the state is fixed to be the one output from GBS, or we consider multiple rounds, the rotation is a degree of freedom which is not available in p breeding.

More generally, if the input states are not necessarily aligned to the sensor lattice, the circuit can be as shown in Fig. 6, where some value *ϕ* is selected for each state such that the peaks align to give a sharply peaked distribution in the p quadrature for both input states.

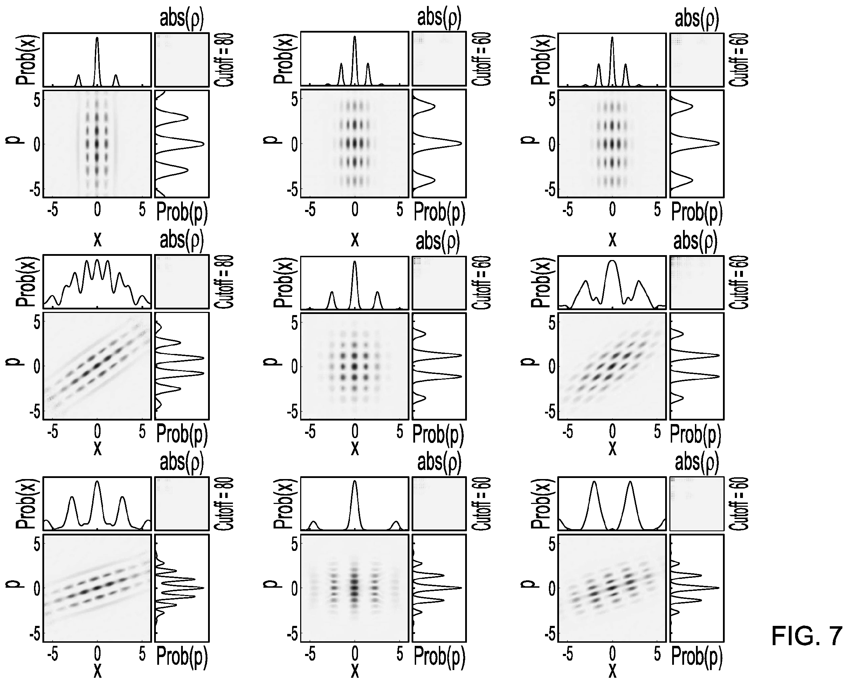

Fig. 7 presents example states with the outputs from breeding with no rotation, rotating enough to align nearest neighbours on the diagonal, and rotating to align the next peaks. The left plots are the input states (with or without the rotations), the middle column is what happens when we breed that state and the state rotated in the opposite direction (an example of y-breeding) and the right column is when we breed the left state in both modes. For the unrotated version, the center and right plots can be defined as +0 = -0). As shown in Fig. 7, breeding two states which are similar but sheared equally in opposite directions can lead to outputting a GKP sensor state.

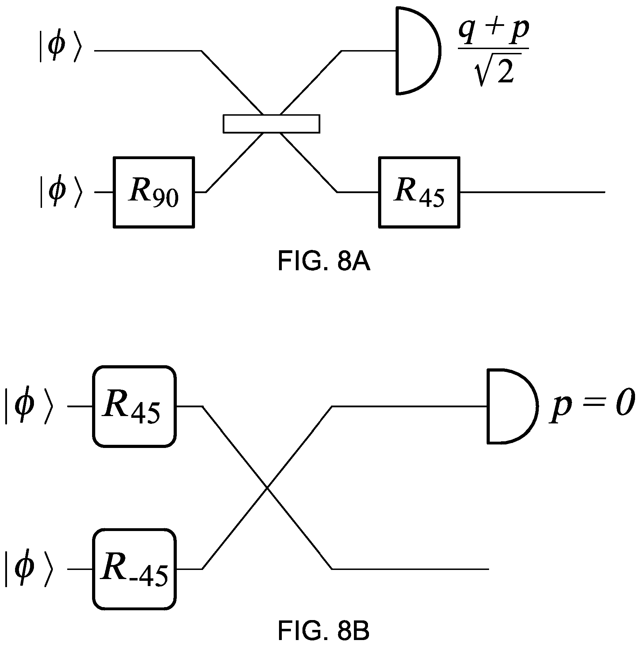

In another example, GKP sensor states were bred using a circuit such as shown in Fig. 8A. One possible intuition behind it is that at early steps in the state preparation, the available states can have good effective squeezing in one of the quadratures whilst the complementary one may be quite bad. In some breeding embodiments, a rule of thumb is that one round of breeding trades around 3dB of effective squeezing from the best to the worst quadrature. In this new scheme instead, a symmetric breeding can be applied in which the quality of the output state is more related to the definability of the peaks along the direction q+p/√2. As shown below, the output state can be seen as the result of doing breeding in the state obtained by a π/4 rotation of the input state (in the case in which the two input states are the same sensor lattice).

More specifically, given an input state |*GKPᵢ*〉, the output of the circuit in Fig.8A can be given by $\left|{GKP}_{o}\right〉 = {\left〈\frac{q + p}{\sqrt{2}}=0\right|}_{1} {\hat{R}}_{2} \left(\frac{π}{4}\right) BS \left(\frac{π}{4}\right) {\hat{R}}_{2} \left(\frac{π}{2}\right) \left|{GKP}_{i}, {GKP}_{i}\right〉 ,$ (1) the latter can be reshuffled into $\left|{GKP}_{o}\right〉 = {\left〈q=0\right|}_{1} {\hat{R}}_{2} \left(\frac{π}{4}\right) {\hat{R}}_{1} \left(\frac{π}{4}\right) BS \left(\frac{π}{4}\right) {\hat{R}}_{2} \left(\frac{π}{2}\right) \left|{GKP}_{i}, {GKP}_{i}\right〉 ,$ (2) and by commuting the rotations with the beam splitter, into $\left|{GKP}_{o}\right〉 = {\left〈p=0\right|}_{1} BS \left(\frac{π}{4}\right) {\hat{R}}_{2} \left(\frac{3 π}{4}\right) {\hat{R}}_{1} \left(\frac{π}{2}\right) \left|{GKP}_{i}, {GKP}_{i}\right〉 .$ (3)

In Fig. 8B, the resulting equivalent breeding circuit is shown. Given that the input state is symmetric, in the sense that the quadratures (q+p)/√2 and (p-q)/√2 are equivalent, this is like breeding the state obtained by applying a π/4 rotation of the input state. This implies that the way in which the quality along each quadrature changes depends on the quadrature distribution of the input state along the diagonal direction.

Input GKP states with different lattice spacings can be bred together by correcting the transmittivity of the beam splitter, which is referred to as "adaptive breeding". In the explanations above, without adaptive breeding, we dealt with input states already brought to the sensor lattice. It was found possible to extend the protocol to consider different lattice spacings, and moreover, different input lattices. In the explanations below, we can first show empirical evidence on the adaptivity for rectangular GKP inputs and then derive the adaptivity parameters for the general sheared input GKP states.

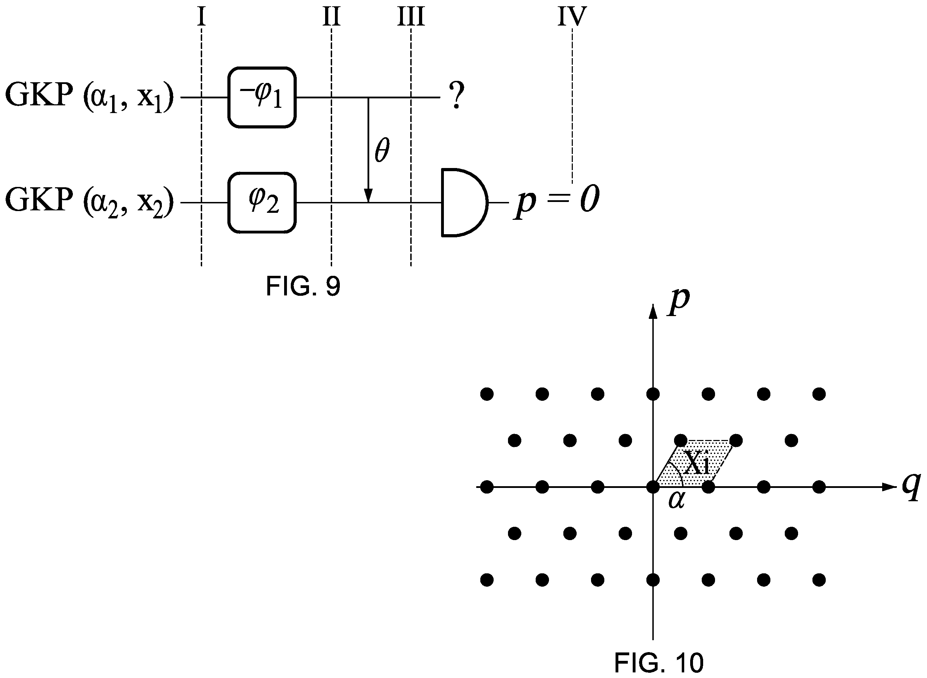

The circuit presented in Fig. 9 can be considered. The input states are sheared GKP states, such as schematized in Fig. 10, and up to rotations, can encompass any possible input GKP state. In this theoretical demonstration, these states are considered to be ideal states, in the sense that they are eigenstates of their respective stabilizers. As shown in Fig. 10, we characterize the GKP lattices through two parameters, α, the spacing along the q quadrature, and χ, the angle of the primitive cell of the lattice. The circuit presented in Fig. 9, breeds two GKP states characterized by the parameters (α1, χ1) and (α2, χ2). These states evolve through a breeding circuit as considered before, with three tuneable parameters: φ1, φ2 and θ, which correspond to a first rotation angle, a second rotation angle, and a beamsplitting angle, respectively. Associated stabilizers can be as follows: ${\hat{S}}_{q} = {e}^{- iα \hat{p}}$ ${\hat{S}}_{{q}_{χ}} = {e}^{\left(i\frac{2 π}{α sin χ}\left(\hat{q} sin χ-\hat{p} cos χ\right)\right)}$

Up to step III in the circuit, the stabilizers evolve jointly into some higher dimensional grid with 4 stabilizers.

This evolution can be obtained by transforming the quadratures inside each stabilizer according to the linear optics. The resulting stabilizers at step III are ${\hat{S}}_{q}^{\left(1, III\right)} = exp \left(-{iα}_{1}\left(cos θ\left({\hat{p}}_{1} cos\left({ϕ}_{1}\right)-{\hat{q}}_{1} sin\left({ϕ}_{1}\right)\right)-sin θ\left({\hat{p}}_{2} cos\left({ϕ}_{1}\right)-{\hat{q}}_{2} sin\left({ϕ}_{1}\right)\right)\right)\right)$ ${\hat{S}}_{{q}_{{χ}_{1}}}^{\left(1, III\right)} = exp \left(i\frac{2 π}{{α}_{1} sin \left({χ}_{1}\right)}\left(cos θ\left({\hat{q}}_{1} sin\left({χ}_{1}+{ϕ}_{1}\right)-{\hat{p}}_{1} cos\left({χ}_{1}+{ϕ}_{1}\right)\right)-sin θ\left({\hat{q}}_{2} sin\left({χ}_{1}+{ϕ}_{1}\right)-{\hat{p}}_{2} cos\left({χ}_{1}+{ϕ}_{1}\right)\right)\right)\right)$ ${\hat{S}}_{q}^{\left(2, III\right)} = exp \left(-{iα}_{2}\left(cos θ\left({\hat{p}}_{2} cos\left({ϕ}_{2}\right)+{\hat{q}}_{2} sin\left({ϕ}_{2}\right)\right)+sin θ\left({\hat{p}}_{1} cos\left({ϕ}_{2}\right)+{\hat{q}}_{1} sin\left({θ}_{2}\right)\right)\right)\right)$ ${\hat{S}}_{{q}_{{χ}_{2}}}^{\left(1, III\right)} = exp \left(i\frac{2 π}{{α}_{2} sin \left({χ}_{2}\right)}\left(cos θ\left({\hat{q}}_{2} sin\left({χ}_{2}-{ϕ}_{2}\right)-{\hat{p}}_{2} cos\left({χ}_{2}-{ϕ}_{2}\right)\right)+sin θ\left({\hat{q}}_{1} sin\left({χ}_{2}-{ϕ}_{2}\right)-{\hat{p}}_{1} cos\left({χ}_{2}-{ϕ}_{2}\right)\right)\right)\right)$

Understanding the effect of the homodyne measurement at the end may be more complex in a general setting, but if there is some set of stabilizers that commute with the measurement, then their projection to the first mode will be a stabilizer of the output state. The strategy then is to build up such combinations of stabilizers and in this way come up with values of the parameters of the circuit that allow for them to exist. A stabilizer will commute with the p-measurement if there is no *q̂*₂ contribution. The following combinations can thus be considered: $\left\{{\hat{S}}_{q}^{\left(1, III\right)}{\left({\hat{S}}_{{q}_{{χ}_{1}}}^{\left(1, III\right)}\right)}^{†},{\hat{S}}_{{q}_{{χ}_{2}}}^{\left(2, III\right)}{\hat{S}}_{q}^{\left(2, III\right)},{\hat{S}}_{q}^{\left(1, III\right)}{\left({\hat{S}}_{q}^{\left(2, III\right)}\right)}^{†},{\hat{S}}_{{q}_{χ}}^{\left(1, III\right)}{\hat{S}}_{{q}_{χ}}^{\left(2, III\right)}\right\}$

Enforcing that the *q̂*₂ contribution to those combinations is zero, the following set of conditions for the parameters of the circuit (*θ, ϕ*1*, ϕ*₂) are obtained:
Condition I: ${tanϕ}_{1} = \frac{2 π}{{α}_{1}^{2}} \frac{1}{1 - \frac{2 π}{{α}_{1}^{2}} {cotχ}_{1}} ,$
Condition II: ${tanϕ}_{2} = \frac{2 π}{{α}_{2}^{2}} \frac{1}{1 + \frac{2 π}{{α}_{2}^{2}} {cotχ}_{2}} ,$
Condition III: $tanθ = \frac{{α}_{2}}{{α}_{1}} \frac{{sinϕ}_{2}}{{sinϕ}_{1}} = \frac{{α}_{1}}{{α}_{2}} \frac{\sqrt{1 + \frac{4 {π}^{2}}{{α}_{1}^{4}} \frac{1}{{sin}^{2} {χ}_{1}} - \frac{4 π}{{α}_{1}^{2}} {cotχ}_{1}}}{\sqrt{1 + \frac{4 {π}^{2}}{{α}_{2}^{4}} \frac{1}{{sin}^{2} {χ}_{2}} + \frac{4 π}{{α}_{2}^{2}} {cotχ}_{2}}} .$

In this example, three combinations were enough, the last one was considered to check consistency. With these rules in hand, the resulting stabilizers for the output state can be computed. As can be seen below, they correspond again to a sheared (non-rotated) GKP state with parameters ${α}_{q}^{out} = {α}_{1} {α}_{2} \frac{\sqrt{AB}}{\sqrt{{α}_{1}^{2} A + {α}_{2}^{2} B}}$ ${χ}^{out} = arctan \left(\frac{2 π}{{α}_{1}^{2} {α}_{2}^{2}}\frac{{α}_{1}^{2} A + {α}_{2}^{2} B}{\left(1-\frac{2 π}{{α}_{1}^{2}}{cotχ}_{1}\right) B - \left(1+\frac{2 π}{{α}_{2}^{2}}{cotχ}_{2}\right) A}\right) ,$ where $A = 1 + \frac{4 {π}^{2}}{{α}_{1}^{4}} \frac{1}{{sin}^{2} \left({χ}_{1}\right)} - \frac{4 π}{{α}_{1}^{2}} {cotχ}_{1}$ $B = 1 + \frac{4 {π}^{2}}{{α}_{2}^{4}} \frac{1}{{sin}^{2} \left({χ}_{2}\right)} + \frac{4 π}{{α}_{2}^{2}} {cotχ}_{2} .$

A feature of these update rules is that they have the sensor lattice as a fixed point. These rules have been derived for ideal GKP states, for which the stabilizers offer an isomorphic description. Remarkably they provide good results when tested on finite energy GKP states, confirming the convergence to the sensor lattice after some rounds of breeding.

Intuition on the inner workings of y-breeding can be acquired by connecting the protocol to some phase estimation protocols. In some cases, this connection can be proven analytically. A challenge to generalizing this proof to y-breeding is that rotations in the optical mode do not immediately translate into rotations in the qubit, likely may have no obvious translation. On the other hand, starting from some known phase estimation circuit, the difficulty when trying to understand the mapping to y-breeding is that the qubit rotations translate into some non-Gaussian operation on the bosonic state.

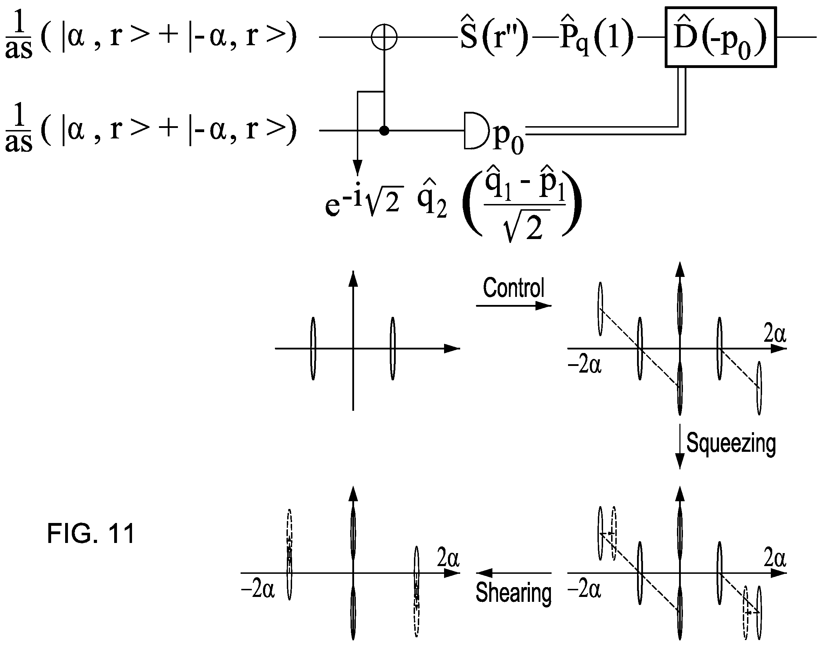

Looking now at what the output of y-breeding would look like after breeding two cat states, the output state of this equivalent one mode circuit can be reproduced by applying the example protocol presented in Fig. 11, where *P̂_{q}* is a shearing operator *e*^{*-iq̂*²}*.*

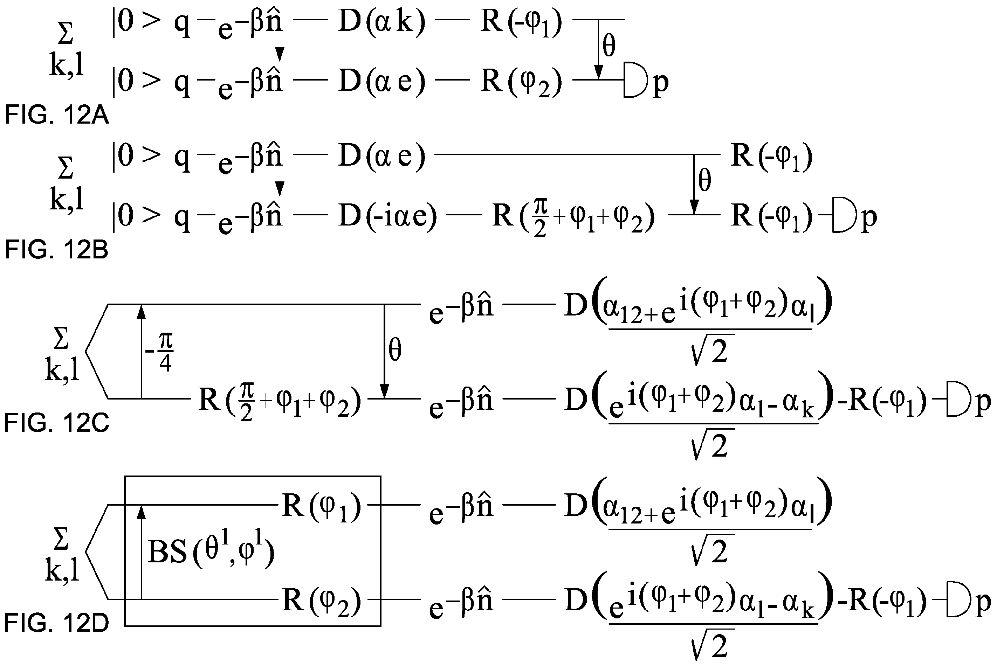

In the same spirit of the computations presented above it is possible to bounce the circuit for adaptive breeding as shown in Fig. 12A. A complexity here is that the relative phase between the top and bottom mode are not π/2, and neither is the beam splitter a balanced one. For that reason, some further manipulation may be helpful, such as shown in Fig. 12B. Once in this form we can commute the π/2 phase through and apply a π/4 beam splitter and its inverse to get what is shown in Fig. 12C. The element consisting of the -π/4 beam splitter followed by a phase shift and a second beam splitter can be decomposed into a beam splitter (with a phase) plus two independent phases, such as shown in Fig. 12D. This mapping can be figured out using the Jordan-Schwinger map.

From this point, the beam splitter can be folded into a one mode operation. An exact mapping can be as follows: $\hat{B} \left(θ, φ\right) \to \hat{S} \left(log\left(tan\left(θ+\frac{π}{4}\right)\right),\frac{φ}{2}\right)$

The rest of the operations can be bounced as done so far, to obtain: ${\sum }_{k , l} \hat{R} \left(-{φ}_{1}\right) \hat{D} \left({γ}_{k , l}\right) {e}^{- β \hat{n}} \hat{R} \left({ϕ}_{1}\right) \hat{S} \left(log\left(tan\left(θ′+\frac{π}{4}\right)\right),\frac{φ}{2}\right) \hat{R} \left({ϕ}_{2}\right) {\hat{e}}^{- β \hat{n}} \hat{D} \left({γ}_{k , l}\right) \hat{R} \left(-{φ}_{1}\right) {\left|{p}_{0}\right〉}_{p}$ where ${γ}_{k , l} = \left({α}_{k}+{e}^{i \left({φ}_{1}+{φ}_{2}\right) {α}_{l}}\right) / \sqrt{2}$*.* The damping and squeezers can be applied, as they do not trivially pass through each other. The final form can be rather similar than for the non adaptive case, with displacements often more sheared.

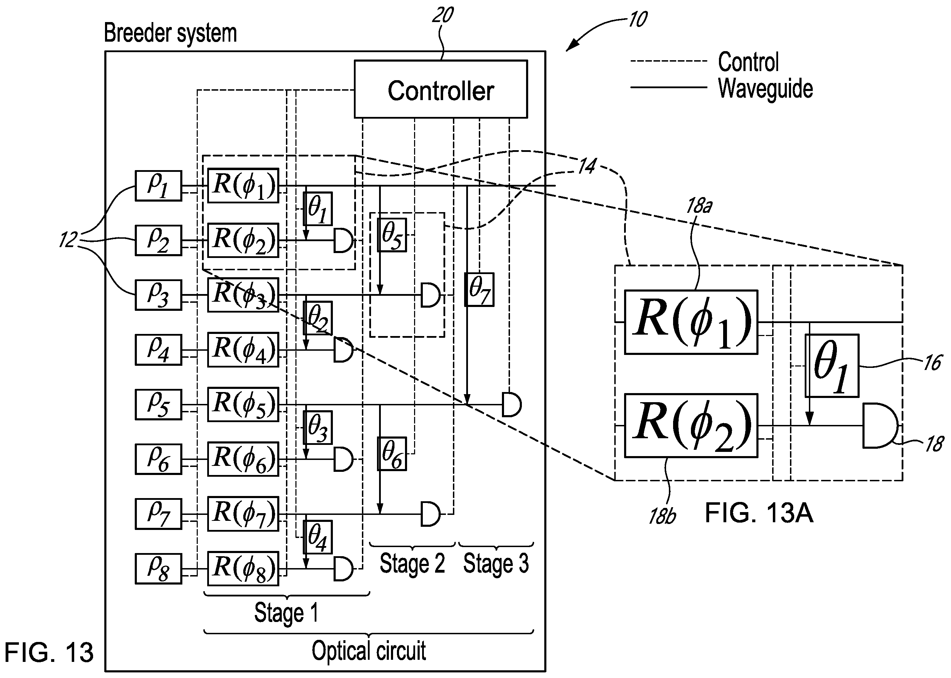

Fig. 13 and Fig. 13A present an example breeder system 10 which can be used to perform breeding in accordance with the discussion presented above. The example breeder system 10 includes a plurality of GBS sources 12 which can be as discussed above, and each produces CV states of light using GBS. Each GBS source 12 can include one or more detectors (not explicitly shown), which acquire information about the states of light produced. The breeder system 10 further has an optical circuit having a cascade of breeding stages. In this example, the optical circuit has three breeding stages (labeled stage 1, stage 2 and stage 3 in Fig. 13), but in other embodiments, optical circuits may have one, two, or more than three stages for instance. The first breeding stage is optically coupled (e.g., via waveguides) to the GBS sources and the latter provides input states. Each breeding stage has one or more output optically coupled (e.g., via waveguides) to a subsequent breeding stage, with its output forming an input to the subsequent breeding stage, except the last breeding stage which has an output of the breeder system 10.

Successive ones of the breeding stages in the cascade have a decreasing number of breeding units 14, with the third stage having a single breeding unit in this example. Each breeding unit 14 includes a beamsplitter 16 operable to interfere input states of light into two output states of light at a controllable ratio based on the corresponding angle Θₙ. Each breeding unit 14 further has a breeder detector 18 measuring one of the two output states of light. In a context where the output states of light are quantum states, acquiring information (i.e., measuring) about a first one of the output states of light (such as performed by the breeder detector 18) simultaneously provides information pertaining to the second one of the two output states of light. The second one of the two output states of light forms an input to the next breeding stage, or an output of the breeder system 10. Accordingly, the input states of the different stages are either the CV states produced by the GBS sources, or the second one(s) of the two output states of light produced by an upstream stage.

The breeding unit(s) 14 of at least one of the stages, such as, in this example, the breeding units 14 of the first stage, have phase shifters 18a, 18b operable to impart corresponding rotations R at controllable angles Φₘ. In this example, these phase shifters 18a, 18b apply rotations to the input states of light, but as seen in the discussions above, this is just an example as in some cases, applying a rotation on an output may be equivalent to applying a rotation on an input in the case of quantum states of light.

A controller 20 is used to control the ratio (Θₙ⁾ of the beamsplitters 16, and to control the angles (Φₘ) of the phase shifters 18a, 18b. This control is performed based on information acquired by the detectors 18 of an earlier stage, or of the GBS sources 12. For instance, the control can be based on the information acquired by the source detectors, the detectors of the GBS sources. The control can alternately, or further, be based on the information acquired by the breeder detectors 18, the detectors of the breeding stages. It will be noted that in some embodiments, multiplexing and/or swapping can be integrated to the optical circuit having a cascade of breeding stages, and the different stages may be optically coupled to one another by waveguides indirectly rather than directly.

It will be noted that in the example presented above, the breeder system 10 is but one example of a breeder system, and this example can be referred to as being of a "compiled" version. This is a simplified version of the breeding capabilities introduced above, which may be easier to implement on hardware than more complex versions. In this compiled version, the breeder detectors 18 are homodyne detectors which can measure at any angle between the p and q quadratures (e.g., not just p-homodyne or y-homodyne). The term "compiled" comes from the fact that the rotations from several rounds of breeding can be "compiled" such that the rotations are only used in the first round of breeding, while subsequent rounds would not require any rotations. The reason why this can be done is the same reason why the two circuits presented at Fig. 5 are equivalent: rotations can be commuted through beam splitters as long as appropriate adjustments are made to the homodyne measurement angle. More complex version of a breeder system may have controllable rotations at one or more breeder unit, potentially every breeder unit, at two or more of the stages, potentially at every stage, for instance.

The parameters can be controlled in a manner for the rotations to cause the states to converge to a rectangular lattice or sensor state, and the states may be sheared from the beginning, or begin rectangular, become sheared, and then converge back to rectangular or square. However, in some embodiments, such as the "compiled embodiment", the rotation is not necessarily applied in the stage where the states are sheared.

It will be noted that there are many different potential hardware implementations. In some embodiments, it may be preferred to use integrated (on-chip) optical phase shifters, but other embodiments may instead use fiber phase shifters such as thermo-electric couplers, piezoelectric actuators, etc. Different kinds of materials may be used to make integrated phase shifters useable in some embodiments, such as lithium niobate (LN), silicon nitride (SiN), barium titanate (BTO), etc. In some cases, lithium niobate electro-optic modulators (EOMs) may be preferred for use in the breeder system due to their speed, and compatibility to clock rates (i.e., the rate at which states are produced by GBS sources and sent into the breeder system) in the MHz range.

In this example context, phase shifts may be achieved using two metal electrodes with the integrated waveguide in between. A voltage difference on the metal electrodes can apply an electric field across the waveguide, and LN experiences a change in refractive index due to the applied electromagnetic (EM) field, known as the Pockels effect. Changing the refractive index changes the amount of phase that the optical signal picks up when going through that portion of the waveguide. Accordingly, the angle can be controlled by changing the voltage difference across the electrodes. When used for the purpose of imparting rotations, the phase shifters can alternately be referred to as rotators.

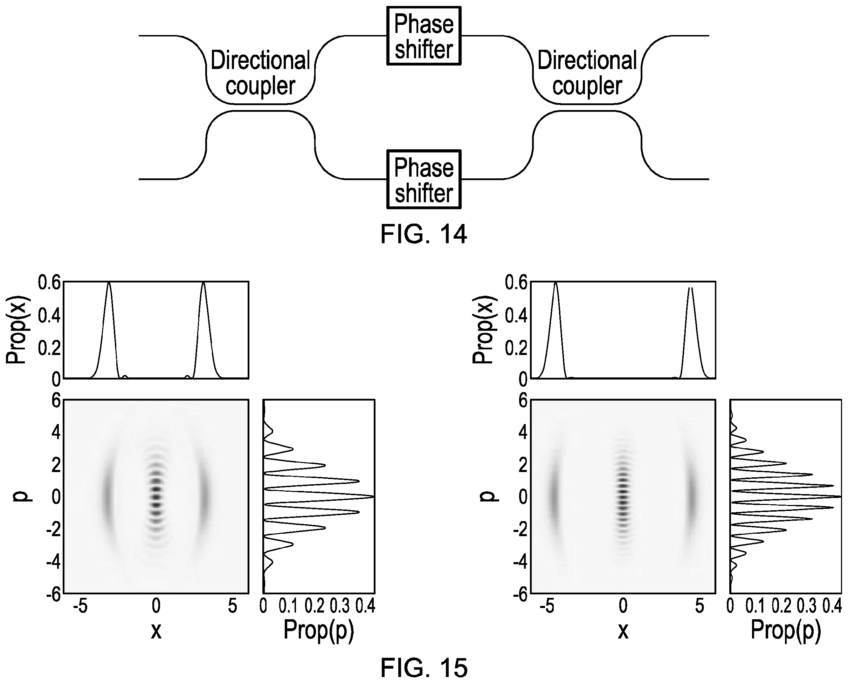

In some embodiments, a phase shifter may used to form a beamsplitter having a controllable ratio (sometimes referred to as a programmable beamsplitter). For instance, as schematized in Fig. 14, a beamsplitter can be embodied as having two directional couplers in series, with a phase shifter between the directional couplers on one or both of the paths, in a configuration forming a Mach-Zehnder interferometer (MZI). Depending on the embodiment, one phase shift on one path or antisymmetric phase shifts across both paths (such as may be embodied using only three electrodes including one between the two paths) may be used, to name two examples. When the phase settings are set to beamsplitter ratios (angles) of 0 or π/2 for instance, such beamsplitters may be used as switches which route signals rather than mix them and may thus be alternately referred to as switches. The examples presented above are examples only, and various different ways of embodying phase shifters (rotators) and beamsplitters are possible.

One potential advantage of introducing the rotations at controllable angles in the context of breeding as presented above is the possibility that over-breeding could be avoided. Some embodiments of breeding shrink the spacing in the q quadrature by a $\sqrt{2}$ factor, so at some point, after enough rounds, the spacing between the peaks in the q quadrature will be comparable to their widths. At this point the breeding outcomes are generally worse than the input states. This may be avoided using the techniques presented above since the spacing of the output lattice may not shrink but instead converge to the sensor lattice spacing.

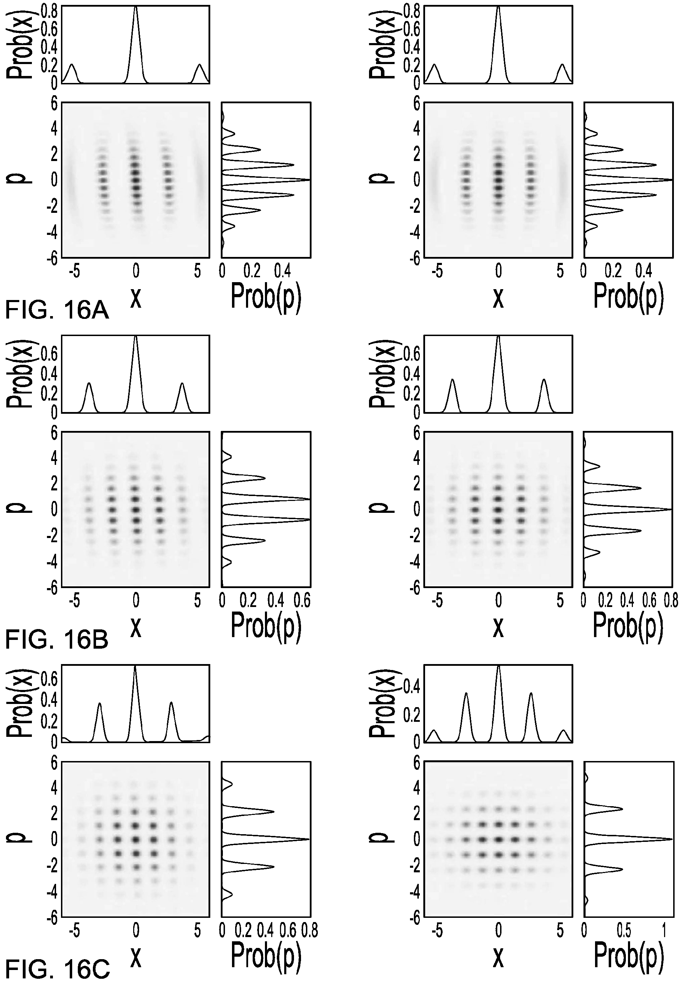

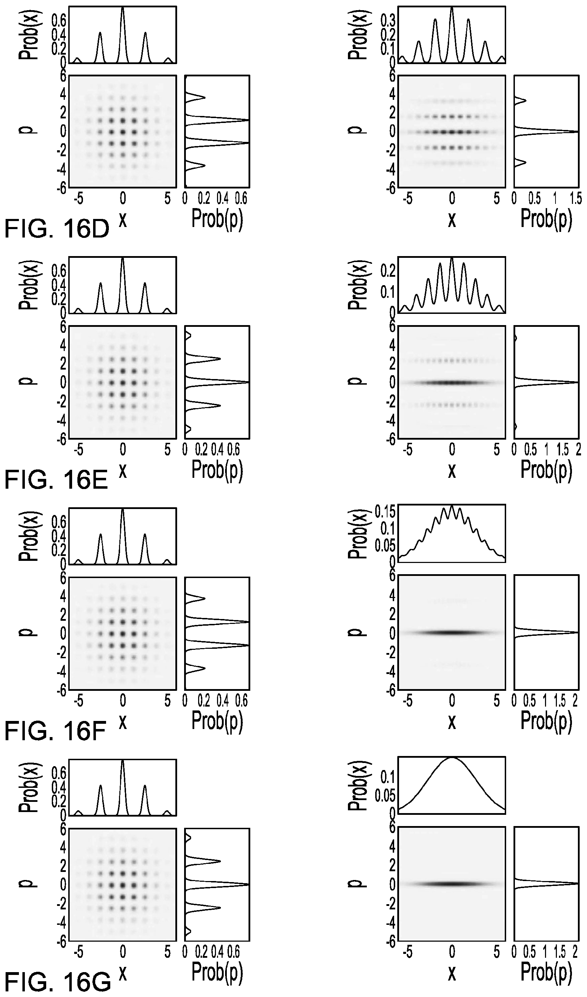

In an example, input states are in the form of two-mode GBS outputs with GBS parameters parameters *r* = ±0.75, *θ* = 0.3*π* and PNR outcomes *n* = 10 (left) and *n* = 20 (right), such as shown in Fig. 15. Breeding is represented in Figs. 16a to 16g where each row corresponds to a round of post-selected *p* = 0 output of breeding using rotations (left) or breeding without rotations (right). The first round is done by breeding the two input states. Subsequent rounds are produced by breeding two identical inputs equal to the output of the round immediately before.

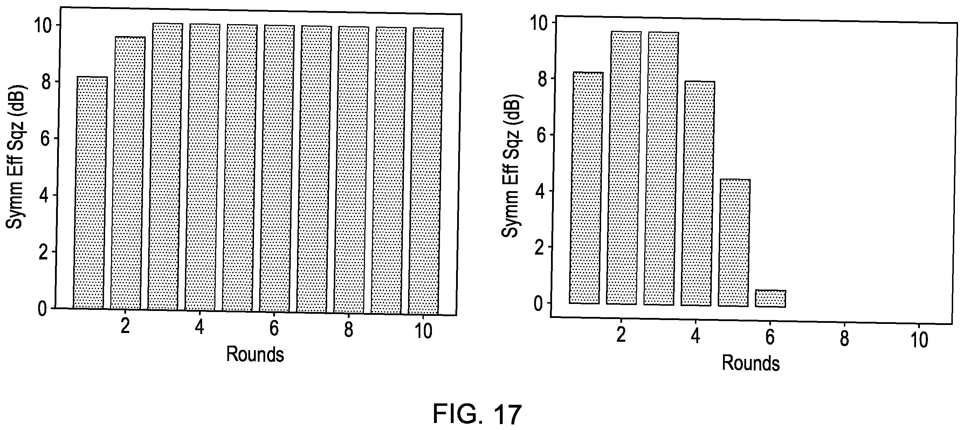

The graphs presented in Fig. 17 show the symmetric effective squeezing vs. round number for breeding using rotations (left) and breeding without rotations (right). For breeding without rotations, the symmetric effective squeezing was calculated with respect to an optimum lattice instead of using the updating rule for the output lattice. The lattice was calculated for each round by optimizing the product of the stabilizers. Otherwise, the symmetric effective squeezing will be significantly worse, especially after 6 rounds.

As discussed above, a breeder system using rotations may be used as, or as part of, a state factory in a source of a quantum computer, such as a quantum computer based on a photonic architecture and integrating Measurement-Based Quantum Computation (MBQC).

MBQC differs from standard circuit-based quantum computation but has been shown to have the ability to be mathematically equivalent, and to provide a universal form of quantum computation. In measurement-based quantum computation, quantum states are initialized and entangled into cluster states. The application of the gates is performed by the way the measurement is applied, and more specifically, as a sequence of adaptive measurements where the way subsequent measurements are performed depends on the results of previous measurements. In MBQC, measurements of the quantum states (e.g., homodyne measurements of entangled photonic states) are what actually perform the quantum logic operations. In one example of photonic MBQC, a number of photonic states (e.g., GKP states, squeezed states) are produced and then entangled into a "cluster state," (e.g., a 3D lattice of optical modes). Measurements are then performed on the cluster state. These measurements are used for error correction and to perform MBQC. Therefore, in MBQC, quantum "gates" are implemented by the measurements, though MBQC maps perhaps less directly to the "circuits" of the standard circuit-based model.

Universal fault-tolerant quantum computers have the potential to outperform classical computers at certain tasks. Fault tolerance - the ability to perform quantum computation in the presence of noise provided that the noise is below some threshold - can be facilitated using quantum error correction schemes. Universality - the ability to apply any quantum gate - requires the preparation of certain states, gates, and/or measurements.

Clifford quantum computation (quantum computing/computation will be referred to herein as QC for short, hence - Clifford QC) refers to quantum computation that makes use of operations restricted to Pauli eigenstate preparation, Clifford gates, and Pauli measurements. Clifford QC, while providing the necessary tools for quantum error correction, is not universal as some quantum gates cannot be represented by a finite number of Clifford operations. To achieve a universal fault-tolerant quantum computer that can outperform classical computers, Clifford QC can be supplemented by a non-Clifford resource (i.e., a non-Clifford preparation, gate, or measurement).

In continuous-variable (CV) quantum computation, wherein the Hilbert space is infinite dimensional, Gaussian QC (comprising Gaussian state preparation, Gaussian operations, and homodyne detection) is analogous to Clifford QC. Examples of continuous-variable QC architectures include optical modes, microwave-cavity modes, and vibrational modes of trapped ions. Photonic CV QC architectures may receive a particular level of interest due to scalability and the ability to leverage existing photonic technologies.

Bosonic quantum error-correcting codes (or simply bosonic codes) embed discrete quantum information into CV systems. In one example of an architecture using bosonic encoding, a plurality of Gaussian Boson Sampling (GBS) sources each configured to generate a continuous-variable (CV) state such as a Gottesman-Kitaev-Preskill (GKP) state may be used, and data may be mapped onto the generated CV states. In doing so, CV noise can be mapped into effective noise acting on the encoded qubits. One popular example of a bosonic code is the Gottesman-Kitaev-Preskill (GKP) code, which makes use of GKP states of light. Such an embodiment can be implemented in a photonic architecture where the CV states are states of light, for instance. Additional details about GKP encoding can be found in "Encoding a Qubit in an Oscillator" by D. Gottesman et al., Physical Review Letters A (64), 012310 (2001).

FIG. 4 illustrates a simplified system-level block diagram of an exemplary quantum computer 100 in accordance with the present disclosure. The components of the quantum computer 100, described in more detail below, can be configured to one or more of: create, generate, shape, measure, decode, and error-correct a selected entangled cluster state that serves as a resource for measurement-based fault-tolerant quantum computation. For example, the quantum computer 100 may be a measurement-based quantum computer in the Raussendorf-Harrington-Goyal (RHG) model using continuous-variable (CV) qubits. Although an example is described below in the context of a measurement-based quantum computing model based on a photonic platform, it is understood that embodiments of the methods described herein are also applicable to other quantum platforms, including superconducting qubits, trapped ion qubits, and any other quantum platforms, and may be of use in circuit-based quantum computing models and even potentially in adiabatic quantum computing models.

In the tangible example presented in Fig. 4, in some embodiments, the quantum computer 100 includes a source module 102, a stitcher 104, and a quantum processing unit (QPU) 106. Each of the source module 102, the stitcher 104, and the QPU 106 represents logical functionality that can be implemented exclusively via hardware, exclusively via software, or via a combination of hardware and software. The functional delineation between the separate elements within the quantum computer 100 may only be a conceptual representation of the overall operation of the quantum computer 100.

The source module 102 is configured to generate a plurality of input quantum states. Such input quantum states can be outputs from a breeder system, for instance. In the case of photonic quantum platforms, the source module 102 may include a plurality of Gaussian Boson Sampling (GBS) sources each configured to generate a continuous-variable (CV) state of light, such as Gottesman-Kitaev-Preskill (GKP) state. Data can be mapped onto the generated CV states, or states otherwise outputted by a breeder system. Additional details about GKP encoding can be found in "Encoding a Qubit in an Oscillator" by D. Gottesman et al., Physical Review Letters A (64), 012310 (2001). In some embodiments, the fidelity of GKP state generation may be boosted by multiplexing the outputs of multiple GBS sources. Additional details regarding GBS source modules can be found, by way of example only, in U.S. Patent No. 11,341,428 by Bourassa et al*.,* entitled "Scalable Photonic Quantum Computing with Hybrid Resource States".

In some embodiments, the source module 102 may include a local pulse train generator. The local pulse train generator is configured to generate a train of local optical pulses that are also referred to as a local oscillator (LO) signal that is operably coupled to elements of quantum computer 100, such as QPU 106, and particularly to the optical detectors (e.g., homodyne detectors) used for projective measurements and for measurement-based quantum computation.

A steady supply of CV states that include both encoded bosonic qubits and squeezed vacuum states may be generated by the source module 102 and sent to the stitcher 104 via a network of optical connections. In some embodiments, the source module 102, the stitcher 104, and the QPU 106 are implemented on photonic integrated circuits (PICs), and the optical network may be implemented using optical fibers compatible with existing optical technologies, which may have a lower level of propagation loss compared to on-chip waveguides. In some embodiments, the source module 102 generates the desired CV states, which may include H-type magic states, by performing Pauli measurements on intermediary CV states within the source module 102. These H-type magic states can then be used as a non-Clifford resource to perform universal quantum computation. In the case of photonic quantum computing architectures, the Pauli measurements may be performed by way of homodyne detection.

The states generated by the source module 102 are provided to the stitcher 104, which is configured to stitch the input states into a lattice structure in accordance with a specific encoding scheme. In some embodiments, the stitcher 104 can interfere these states, such as through a network of static 50:50 beamsplitters with phase delays or reconfigurable beamsplitters into what is referred to as a higher dimensional multimode entangled state, referred to hereinbelow as a cluster state for short, before sending/routing the multimode entangled state to the QPU 106 to be processed. As used herein, "stitching" refers to the creation/imposition of entanglement between the different modes at different lattice sites. In some embodiments, during operation of the quantum computer 100, non-deterministically generated encoded qubits and non-Gaussian states of light can be stitched into a random but known subset of the sites (by virtue of them being generated at a random subset of locations, and not being generated at other locations), while the remaining sites are populated with deterministically generated Gaussian states, such as squeezed vacuum states for example. An indication of whether or not a location is within the subset of the sites is provided. Additional details of higher dimensional multimode entangled states may be found in Bourassa, cited above.

Measurements can be performed on the higher dimensional multimode entangled state by a measurement module 108 of the QPU 106 to provide electric field quadrature information (e.g., the position or amplitude quadrature referred to herein as the "q quadrature" and the momentum or phase quadrature referred to herein as the "p quadrature"). The measurements are performed by one or more optical detectors of the measurement module 108. In some embodiments, the optical detectors are homodyne detectors which can be used to perform measurements on each macronode of the multimode state to reduce each macronode into a single node with multiple edges. The measurement outcomes can be used by the quantum computing system to perform error correction and can also be utilized by the system to perform measurement-based quantum computation (MBQC). The optical detectors, (e.g., homodyne detectors) may be configured to perform quadrature measurements by interfering the optical modes of an input entangled resource state and the train of local optical pulses on a beamsplitter and detecting the optical power difference of the two beam splitter outputs as an indication of the modal property(ies) of the quantum state of the given optical pulse. The measurement outcomes collected on the multimode entangled states (i.e., at the physical hardware layer) can be processed together to implement one or more aspects of an error correction code. The measurement results can be processed by the QPU 106, which may be configured to take, as inputs, the measurement outcomes that have been realized to perform the logical operations.

The control of at least one of and typically each one of the source module 102, stitcher 104, and quantum processing unit 106 cannot be performed manually and is performed via hardware and software elements which will be referred to herein as a controller. The controller can be a classical computer, i.e., a computer based on bits rather than qubits for computation, including at least one processor wherein control instructions are stored in computer-readable memory and are accessible to the at least one processor. The control instructions can include a plurality of functions, such as a source module control function, a stitcher module control function, and a quantum processing unit control function, each of which can include a plurality of sub-processes. The control instructions typically include a definition of logical states which are mapped to the specific hardware elements of the given embodiment.

It will be understood that the expression "classical computer," or simply "computer" for short, as used herein, is not to be interpreted in a limiting manner. It is rather used in a broad sense to generally refer to the combination of some form of one or more processing units and some form of memory system accessible by the processing unit(s). The memory system can be of the non-transitory type. The use of the expression "computer" in its singular form as used herein includes within its scope the combination of two or more computers working collaboratively to perform a given function. Moreover, the expression "computer" as used herein includes within its scope the use of partial capabilities of a given processing unit. Example computers include supercomputers, desktops, laptops, smartphones, smart watches, less elaborated controller devices, etc.

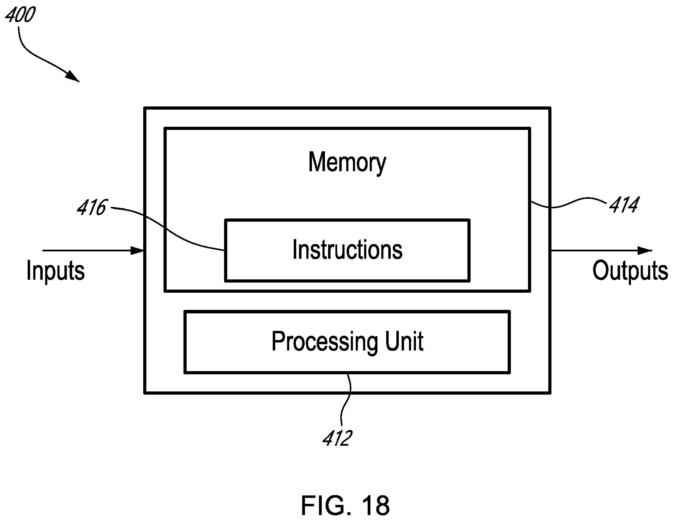

An example computer 400 is presented in Fig. 18. In this example, the computer 400 includes a processing unit 412 and a memory system 414 storing instructions 416.

A processing unit 412 can be embodied in the form of a general-purpose microprocessor or microcontroller, a digital signal processing (DSP) processor, an integrated circuit, a field programmable gate array (FPGA), a reconfigurable processor, or a programmable read-only memory (PROM), to name a few examples.

The memory system 414 can include a suitable combination of any suitable type of computer-readable memory located either internally or externally, and accessible by the processor in a wired or wireless manner, either directly or over a network such as the Internet. A computer-readable memory can be embodied in the form of random-access memory (RAM), read-only memory (ROM), compact disc read-only memory (CDROM), electro-optical memory, magneto-optical memory, erasable programmable read-only memory (EPROM), electrically erasable programmable read-only memory (EEPROM), or ferroelectric RAM (FRAM), to name a few examples.

A computer 400 can have one or more input/output (I/O) interfaces to allow communication with a human user and/or with another computer via an associated input, output, or input/output device such as a keyboard, a mouse, a touchscreen, an antenna, a port, etc. Each I/O interface can enable the computer to communicate and/or exchange data with other components, to access and connect to network resources, to serve applications, and/or to perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, Bluetooth, WiMAX), SS7 signaling network, fixed line, local area network, or wide area network, to name a few examples.

It will be understood that a computer can perform functions or processes via hardware or a combination of both hardware and software. For example, hardware can include logic gates included as part of a silicon chip of a processor. Software (e.g., an application or process) can be in the form of data such as computer-readable instructions stored in a non-transitory computer-readable memory accessible by one or more processing units. With respect to a computer or a processing unit, the expression "configured to" relates to the presence of hardware or a combination of hardware and software which is operable to perform the associated functions. Different elements of a computer, such as processor and/or memory, can be local, in part remote, or in whole remote and/or distributed and/or virtual.

The methods and systems performed by the classical computer in the context of the present disclosure may be implemented in a high-level procedural or object-oriented programming or scripting language, or a combination thereof, to communicate with or assist in the operation of a computer system, for example the controller. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically, the functionality of the program modules may be combined or distributed as desired in various embodiments. The technical solution of embodiments may be in the form of a software product. The software product may be stored in a non-volatile or non-transitory storage medium, which can be a compact disk read-only memory (CDROM), a USB flash disk, or a removable hard disk. The software product includes a number of instructions that enable a computer device (personal computer, server, or network device) to execute the methods provided by the embodiments.

As can be understood, the examples described above and illustrated are intended to be exemplary only. For instance, while homodyne measurement was evoked as an example means of measurement by the detectors, some embodiments may use heterodyne measurement (including generaldyne, a.k.a. squeezed heterodyne, which may alternately be considered a hybrid between homodyne and heterodyne), or interchange homodyne measurement and heterodyne measurement at different ones of the breeding stages or breeding units. The scope is indicated by the appended claims.

## Claims

1. A breeder system comprising:
a plurality of Gaussian boson sampling (GBS) sources (12) operable to produce continuously variable (CV) states of light, each GBS source having one or more source detectors configured to acquire quantum information about the CV states of light produced;
an optical circuit having a cascade of one or more breeding stages optically connected between the plurality of GBS sources (12) and an output, each breeding stage having one or more breeding units (14), successive ones of the one or more breeding stages in the cascade having a decreasing number of breeding units (14), each breeding unit (14) including
a beamsplitter (16) operable to split input states of light into output states of light at a controllable ratio, and
a breeder detector (18) measuring one of the output states to acquire quantum information about another one of the output states,
wherein the one or more breeding units (14) of at least one of the breeding stages have a first phase shifter operable to impart a phase rotation at a first controllable angle, and a second phase shifter operable to impart a phase rotation at a second controllable angle; and
a controller (20) operable to control the ratio, the first angle and the second angle based on the acquired quantum information.

2. The breeder system of claim 1 wherein the one or more breeding units (14) of a first one of the breeding stages in the cascade each have the first phase shifter and the second phase shifter.

3. The breeder system of claim 2 wherein the breeder system is of the compiled breeding type, has two or more of the breeding stages in the cascade, wherein the first phase shifter and the second phase shifter implement compiled rotations of several rounds of breeding, and wherein the one or more breeding units (14) of a second or subsequent one of the breeding stages in the cascade do not have the first and second phase shifters.

4. The breeder system of claim 1 wherein the one or more breeding units (14) of each one of the breeding stages in the cascade each have the first phase shifter and the second phase shifter.

5. The breeder system of any one of claims 1 to 4 wherein the cascade has two or more breeding stages.

6. The breeder system of claim 3 or 5 wherein the successive ones of the breeding stages each have half the number of breeding units (14) than the previous one of the breeding stages in the cascade.

7. The breeder system of any one of claims 1 to 6 wherein the breeder detector (18) is operable to perform a homodyne measurement.

8. The breeder system of claim 7 wherein the controller (20) is further operable to control a quadrature of the homodyne measurement based on the acquired quantum information.

9. The breeder system of any one of claims 1 to 8 wherein the controller (20) is operable to control the ratio, the first angle and the second angle based on the acquired information about the CV states of light.

10. The breeder system of any one of claims 1 to 9 wherein the controller (20) is operable to control the ratio, the first angle and the second angle based on the acquired information about the other output states.

11. A process of generating a Gottesman-Kitaev-Preskill (GKP) quantum state of light, the process comprising:
generating a plurality of continuously variable (CV) states of light using Gaussian boson sampling (GBS) sources (12);
performing breeding operations in a cascade of one or more breeding stages wherein, in each breeding stage one or more pairs of input states of light are beam splitted into an output state routed forward and a detected state which is measured, the breeding operations of at least one of the breeding stages including performing a first rotation in phase space of a first one of the corresponding input states, output state and detected state, and performing a second rotation in phase space of a second one of the corresponding input states, output state and detected state; and
controlling an angle of the beam splitting, an angle of the first rotation, and an angle of the second rotation in a manner for the output state of a final one of the one or more breeding stages in the cascade to be the GKP quantum state of light.

12. The process of claim 11 wherein the one or more breeding stages include two or more breeding stages, wherein said breeding operations of only a first one of the two or more breeding stages includes said performing the first rotation and the second rotation in phase space, and wherein said first rotation and second rotation are compiled rotations implementing several rounds of breeding.

13. The process of any one of claims 11 or 12 wherein the one or more pairs of input states of light of at least one of the one or more breeding stages include a sheared state, wherein the first rotation and the second rotation preferably rotate the one or more sheared state towards a rectangular lattice state.

14. The process of any one of claims 11 to 13 wherein said controlling further includes controlling a quadrature of the measurement of the detected state.

15. The process of any one of claims 10 to 14 wherein the input states of light of the one or more pairs are GKP states **characterized by** the parameters (α₁, χ₁) and (α₂, χ₂), the angle of the first rotation φ₁, the angle of the second rotation is φ₂, and the angle of the beam splitting is θ, satisfying the conditions
Condition I: $tan {φ}_{1} = \frac{2 π}{{α}_{1}^{2}} \frac{1}{1 - \frac{2 π}{{α}_{1}^{2}} cot {χ}_{1}} ,$
Condition II: $tan {φ}_{2} = \frac{2 π}{{α}_{2}^{2}} \frac{1}{1 + \frac{2 π}{{α}_{2}^{2}} cot {χ}_{2}} ,$
Condition III: $tan θ = \frac{{α}_{2}}{{α}_{1}} \frac{sin {φ}_{2}}{sin {φ}_{1}} = \frac{{α}_{1}}{{α}_{2}} \frac{\sqrt{1 + \frac{4 {π}^{2}}{{α}_{1}^{2}} \frac{1}{{sin}^{2} {χ}_{1}} - \frac{4 π}{{α}_{1}^{2}} cot {χ}_{1}}}{\sqrt{1 + \frac{4 {π}^{2}}{{α}_{2}^{2}} \frac{1}{{sin}^{2} {χ}_{2}} + \frac{4 π}{{α}_{2}^{2}} cot {χ}_{2}}} .$
